# EUROPEAN PATENT SPECIFICATION

(11) **EP 2 713 242 B1**
(45) Date of publication and mention of the grant of the patent: **20.09.2017**
(21) Application number: 13178437.3
(22) Date of filing: 30.07.2013
(51) Int. Cl.: G06F 3/0346, G06F 3/01, G06F 1/16, G06F 3/03

(54) **Smart screen rotation based on user orientation**
Intelligente Bildschirmrotation basierend auf der Benutzerausrichtung
Rotation d'écran intelligent selon l'orientation d'utilisateur

(30) Priority: 28.08.2012 KR 20120094157
(43) Date of publication of application: 02.04.2014
(73) Proprietor: Samsung Electronics Co., Ltd., Gyeonggi-do 443-742 (KR)
(72) Inventor: Lee, Woo-Yong, Seoul (KR); Park, Kwang-Kyu, Gyeonggi-do (KR); Kwon, Beom-Joon, Gyeonggi-do (KR); Bak, Hyeon-Jae, Gyeonggi-do (KR)
(74) Representative: Nederlandsch Octrooibureau

(56) References cited:
- EP-A1- 2 280 331
- EP-A2- 2 428 864
- WO-A1-2012/144526
- US-A1- 2010 278 426
- US-A1- 2011 037 866

## Description

### 1. Technical Field

The present disclosure relates to automatic screen rotation in a portable electronic device.

### 2. Description of the Related Art

Portable electronic devices ("portable devices") such as smart phones and tablet PCs have become necessities of modern life due to technological advances and their ease of carriage. Portable devices have developed into multimedia equipment providing a variety of services such as a voice call function, a video call function, an information input/output function, and a data storage function. Touch screen portable devices are particularly popular..

Today's portable devices with rectangular shaped displays typically provide an automatic screen rotation function ("autorotation") that automatically rotates a displayed image with respect to the display when the portable device is detected to be oriented in a specific way. For instance, when the device with rectangular display is oriented vertically such that the short sides are parallel to the ground, an image (e.g., a text document or a digital photograph) may be substantially aligned with the entire display area such that the long sides of the image are parallel with the long sides of the display (and of the device). When the device is then rotated to a horizontal orientation, the image is rotated by 90° with respect to the display such that the long sides of the image are parallel to the short sides of the display.

However, the automatic screen rotation function can be inconvenient and frustrating to a user in situations where the screen image is automatically rotated due to device rotation even though the user did not intend to cause the image EP 2428864 A2 relates to a portable electronic device that includes a camera and a display switchable between a portrait mode and a landscape mode in response to an inertial sensor. When it is determined that the display mode should be switched in response to movement of the device, a feature of a user of the device, such as the user's face, is imaged with the camera. If the imaged feature changes orientation with respect to the display by less than a threshold amount, then the switch in display mode is disabled and the display remains in its current mode.
EP 2280331 A1 relates to a method for controlling an orientation of a display of a wireless device using a combination of accelerometer-determined orientation and camera-determined orientation, the camera being a frontal camera used to confirm or reverse the orientation found by the accelerometer. In the case that no face is detected for determining the camera orientation, a first orientation determined by the accelerometer is set as the display orientation and the display orientation is then set accordingly. Furthermore, the system may be configured to try three times to acquire an image and if after the third time there is still no face detected, then the method set the orientation determined by the accelerometer. WO 2012/144526 A1 relates to an information display device that comprises: an attitude change degree computation unit which computes a degree of change of a state of attitude which an attitude detection unit has detected; an attitude change degree assessment unit which assesses whether the degree of change of the state of attitude of the information display device which the attitude change degree computation unit has computed is greater than or equal to a threshold; an image capture unit control unit which activates the image capture unit when the attitude change degree assessment unit has assessed that the degree of change of the state of attitude of the information display device is greater than or equal to the threshold; a face detection unit which detects a person's face which appears in an image which has been captured and obtained by the image capture unit; a face direction specification unit which specifies a vertical orientation of the person's face which the face detection unit detects; a display direction assessment unit which assesses whether the vertical orientation of the screen display which is displayed on the display unit is the same orientation as the vertical orientation of the person's face which the face direction specification unit specifies; and a display direction switch unit which, when the display direction assessment unit has assessed that the vertical orientation of the screen display which is displayed on the display unit is not the same orientation as the vertical orientation of the persons face, switches the vertical orientation of the screen display which is displayed on the display unit to the same orientation as the vertical orientation of the person's face.

US 2010/278426 A1 discloses a face detection algorithm, in which if face detection fails for 0 tilt 203, the image is rotated in increments (e.g. increments of 5 degrees), starting from, for example, 15 degrees until a face is detected.

### SUMMARY

An aspect of the present disclosure is to substantially solve at least the above problems and/or disadvantages and to provide at least the advantages below. Accordingly, the present invention provides a method in an electronic device according to claim 1 and an electronic device according to claim 9.

Accordingly, one aspect is to provide an apparatus and method for providing a smart automatic screen rotation function in an electronic device in consideration of an orientation change of the device user himself with respect to the device orientation.

According to one aspect, a method for controlling screen rotation in an electronic device is provided. The method includes determining a changed direction of the electronic device, determining a direction of a user, and determining whether to rotate a screen by comparing the changed direction of the electronic device with the direction of the user.

The direction of the user may be determined by capturing an image with a front camera of the device, and performing face detection. When the direction of the user and the changed direction of the electronic device are substantially the same, it may be determined that no automatic screen rotation is to occur, even if the electronic device direction has changed to a point where it would normally cause rotation of the screen. Thereby, unintentional screen rotations are prevented or reduced.

In an exemplary embodiment, electronic device includes at least one processor for executing computer programs, a memory for storing data and instructions, and a program stored in the memory and driven by the at least one processor. The processor determines a changed direction of the electronic device, determines a direction of a user, and determining whether to rotate a screen by comparing the changed direction of the electronic device with the direction of the user.

According to one aspect, a method for controlling screen rotation in an electronic device is provided. The method includes determining a direction of the electronic device, determining a direction of a user, and determining whether to rotate a screen by comparing the direction of the electronic device with the direction of the user.

In an exemplary embodiment, electronic device includes display, and at least one processor. The the processor determines a direction of the electronic device, determines a direction of a user, and determining whether to rotate a screen by comparing the direction of the electronic device with the direction of the user.

### BRIEF DESCRIPTION OF THE DRAWINGS

The above and other aspects, features and advantages of the present technology will become more apparent from the following detailed description when taken in conjunction with the accompanying drawings in which:
FIG. 1 is a block diagram illustrating a construction of an electronic device according to the present invention;
FIG. 2 is a block diagram illustrating a construction of a processor according to an exemplary embodiment of the present invention;
FIG. 3 is a flowchart illustrating a method for providing a screen rotation function in consideration of a direction change value of a user in an electronic device according to the first exemplary embodiment of the present invention;
FIG. 4 is a flowchart illustrating a method for providing a screen rotation function in consideration of a direction change value of a user in an electronic device according to the second exemplary embodiment of the present invention;
FIG. 5 is a flowchart illustrating a method for determining a direction change value of a user in an electronic device according to an exemplary embodiment of the present invention;
FIG. 6 is a diagram illustrating an example screen configuration based on the direction of an electronic device and the direction of a user according to an exemplary embodiment;
FIG. 7 is a diagram illustrating an example screen configuration based on the direction of an electronic device and the direction of a user according to an exemplary embodiment; and
FIG. 8 is a diagram illustrating a screen configuration based on the direction of an electronic device and the direction of a user according an exemplary embodiment.

### DETAILED DESCRIPTION

Exemplary embodiments of the present invention will be described herein below with reference to the accompanying drawings. In the following description, well-known functions or constructions may not described in detail to avoid obscuring the invention in unnecessary detail. Further, some terms used herein may differ from their ordinary usage. Therefore, the terms should be understood on the basis of the disclosure throughout this specification.

Below, a technology is described that adaptively provides an automatic screen rotation function in an electronic device. Here, the automatic screen rotation function represents a function of rotating the display direction of a display region with respect to the physical display of the electronic device.

Herein, terms such as "rotating a screen", "screen rotation" and the like refer to rotating an image with respect to the physical display of the device. An image can be a photographic type image, or an informational type image such as a text document, a drawing, or any other contents.

Herein, the term "direction" can mean "orientation". For example, when a rectangular device is said to have a vertical direction, the short sides of the device are oriented parallel to the ground. When a user is said to have a vertical direction or orientation, an imaginary line connecting the centers of his left and right eyes is parallel to the ground.

Herein, the term "substantially" typically means that the recited characteristic, parameter, or value need not be achieved exactly, but that deviations or variations may occur in amounts that do not preclude the effect the characteristic was intended to provide.

In the following description, the exemplary electronic device can be a portable electronic device with a camera. The electronic device can be equipped with or without a communication function. The electronic device can be a portable (e.g., hand held) terminal, a mobile terminal, a mobile communication terminal, a smartphone, a tablet PC, a mobile pad, a media player, a Personal Digital Assistant (PDA), , a laptop computer, a netbook, , a Mobile Internet Device (MID), a Ultra Mobile Personal Computer (UMPC), a navigator, a smart TV, a wristwatch, a digital camera, and a music player (e.g., MP3 player), a desktop PC or a television. Also, the electronic device may be any portable electronic device having a combination of functions of two or more devices among the aforementioned devices.

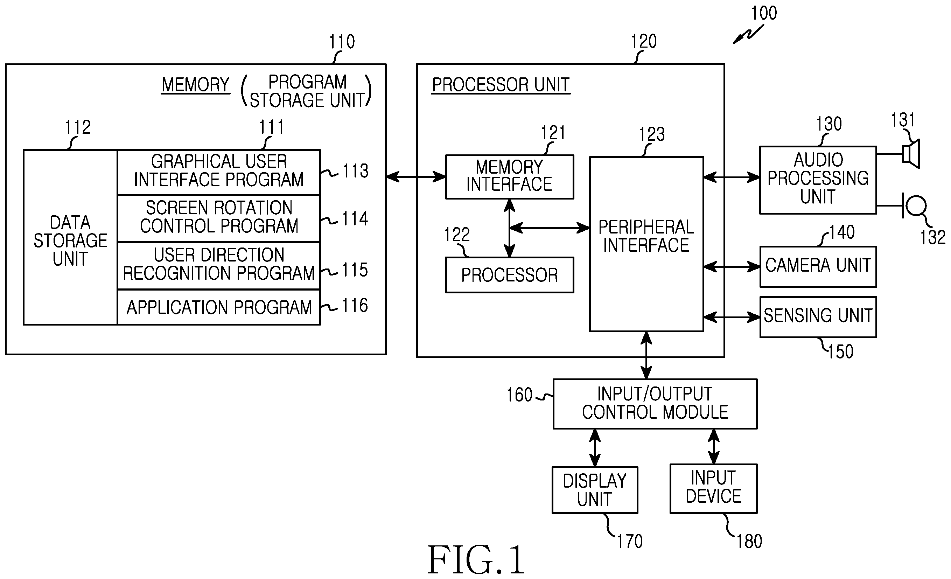

FIG. 1 is a block diagram illustrating a construction of an example electronic device, 100, according to an exemplary embodiment. The electronic device 100 includes a memory 110, a processor unit 120, an audio processing unit 130, a camera unit 140, a sensing unit 150, an input/output controller 160, a display unit 170, and an input device 180. Here, the memory 110 may be provided in plural memory units.

Each constituent element is described as follows.

The memory 110 includes a program storage unit 111 for storing programs for controlling operations of device 100, and a data storage unit 112 for storing data generated during program execution.

The data storage unit 112 stores information about automatic screen conversion mode support or non-support of each application program.

The program storage unit 111 includes a Graphical User Interface (GUI) program 113, a screen rotation control program 114, a user direction recognition program 115, and at least one application program 116. Here, programs included in the program storage unit 111 are each a set of instructions, and may be expressed as an instruction set.

The GUI program 113 includes at least one software constituent element for graphically providing a user interface through the display unit 170. For example, the GUI program 113 can control the displaying on the display unit 170 information of an application program driven by the processor 122. For another example, the GUI program 113 can control the display direction of the display unit 170 in accordance with a display direction determined in the screen rotation control program 114.

The screen rotation control program 114 includes at least one software constituent element for providing an automatic screen rotation function in consideration of a direction change value of the electronic device 100 and a direction change value of a user. For example, the screen rotation control program 114 can selectively provide the automatic screen rotation function in consideration of a direction change value of the electronic device 100 dependent on the rotation of the electronic device 100 sensed through the sensing unit 150 and a direction change value of the user determined through the user direction recognition program 115. In detail, if the direction change value of the electronic device 100 and the direction change value of the user are the same, the screen rotation control program 114 maintains the display direction of the display unit 170 as is. That is, if the direction change value of the electronic device 100 and the direction change value of the user are the same in a state where the automatic screen rotation function is activated, the screen rotation control program 114 can restrict a display direction rotation of the display unit 170 resulting from a direction change of the electronic device 100. Meanwhile, if the direction change value of the electronic device 100 and the direction change value of the user differ from each other, the screen rotation control program 114 commands a rotation of the display direction of the display unit 170 in consideration of the direction change of the electronic device 100.

If the direction change of the user cannot be sensed through the user direction recognition program 115, the screen rotation control program 114 may command a rotation of the display direction of the display unit 170 in consideration of the direction change of just the electronic device 100.

Further, if the rotation of the electronic device 100 is sensed through the sensing unit 150, the screen rotation control program 114 may activate the camera unit 140 in order for the user direction recognition program 115 to sense the direction change of the user. At this time, the screen rotation control program 114 can selectively activate the camera unit 140 according to an automatic screen rotation function provision or non-provision of an application program that is being executed at a time point at which the rotation of the electronic device 100 is sensed.

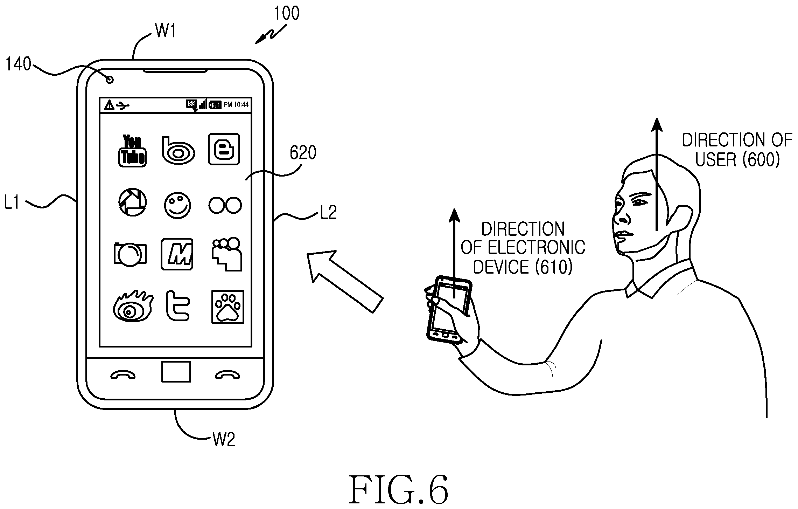

The user direction recognition program 115 includes at least one software constituent element for determining the direction of a user. The user direction recognition program 115 can determine the user's direction by using an image acquired through the camera unit 140, preferably a front camera of camera unit 140 with lens mounted on the same side as the device 100's display screen. For example, by using a face detection algorithm, the user direction recognition program 115 can perform face detection through position recognition of at least one of a contour of a face, eyes, a nose, a chin, and a mouse in the image acquired through the camera unit 140. If detecting a face in the image acquired through the camera unit 140, the user direction recognition program 115 can recognize that the user is oriented in the same direction as the electronic device 100. In detail, the electronic device 100 can recognize the face in the image of the same direction as the direction of the electronic device 100. According to this, if recognizing the face in the image provided from the camera unit 140, the user direction recognition program 115 recognizes that the user is in the same direction as the electronic device 100.
if failing to detect the face in the image provided from the camera unit 140, the user direction recognition program 115 rotate the image acquired through the camera unit 140 in consideration of direction change information of the electronic device 100. For example, referring to the left side of FIG. 6, if the left and right sides L1, L2 are pointing up (perpendicular to the ground), and if the electronic device 100 is rotated by 90° to the right, the user direction recognition program 115 can rotate the image acquired through the camera unit 140 by 90° to the right.

Thereafter, the user direction recognition program 115 can perform face detection using the rotated image.

If detecting the face in the rotated image, the user direction recognition program 115 can determine the direction of the user according to the direction change information of the electronic device 100.

If failing to detect the face in the rotated image, the user direction recognition program 115 recognizes that it cannot detect the face through the image acquired through the camera unit 140.

The application program 116 includes a software constituent element for at least one application program installed in the electronic device 100.

The processor unit 120 includes a memory interface 121, at least one processor 122, and a peripheral interface 123. Here, the memory interface 121, the at least one processor 122, and the peripheral interface 123, which are included in the processor unit 120, can be integrated as at least one integrated circuit or can be realized as separate constituent elements.

The memory interface 121 controls the access of constituent elements such as the processor 122 and the peripheral interface 123, to the memory 110.

The peripheral interface 123 controls the connection of the processor 122 and the memory interface 121 with input/output peripheral devices of the electronic device 100.

The processor 122 controls the electronic device 100 to provide various multimedia services, by using at least one software program. To this end, the processor 122 controls execution of at least one software program stored in the memory 110 and provides a service corresponding to the executed program.

The audio processing unit 130 provides an audio interface between the user and the electronic device 100 through a speaker 131 and a microphone 132.

The camera unit 140 captures an image of a subject through a camera lens to provide a collection image. Camera unit 140 can include a camera sensor converting an optical signal into an electrical signal, an image processing unit converting an analog image signal into a digital image signal, a signal processing unit processing to display the image signal output from the image processing unit on the display unit 170, and the like. Here, the camera sensor can be a Charge Coupled Device (CCD) sensor or a Complementary Metal-Oxide-Semiconductor (CMOS) sensor and the like, and the signal processing unit can be realized as a Digital Signal Processor (DSP). The camera unit 140 may be called an image sensor. As mentioned, camera unit 140 includes a front camera with lens disposed on the front surface of device 100, i.e., the same side as the display screen of display unit 170. The front camera is useful for both "self shooting" and for detecting user orientation in accordance with the invention. A rear camera (not shown) on the rear surface of device 100 is also preferably included for typical digital photography.

The sensing unit 150 senses motion and direction of the electronic device 100. For example, the sensing unit 150 includes at least one of an acceleration sensor, an electro-magnetic sensor, a gyroscope sensor, and an altitude sensor.

The input/output (I/O) controller 160 provides interface between an input/output device such as the display unit 170, the input device 180, etc. and the peripheral interface 123.

The display unit 170 displays status information of the electronic device 100, a character input by a user, a moving picture, a still picture and the like. For example, the display unit 170 displays information of an application program driven by the processor 122. The display unit 170 can change a display direction according to an automatic screen rotation command that is determined and generated by the screen rotation control program 114.

Further, if the display unit 170 is composed of a touch screen, the display unit 170 further includes a touch input unit. The touch input unit provides touch information sensed through a touch panel, to the processor unit 120 through the input/output controller 160. The touch input unit provides touch information generated by a touch pen or the user's finger, to the processor unit 120 through the I/O controller 160.

The input device 180 provides input data generated by user's selection, to the processor unit 120 through the I/O controller 160. For example, the input device 180 could have only a single control button for control of the electronic device 100. For another example, the input device 180 may be composed of a keypad for receiving provision of input data from a user.

The electronic device 100 may further include, though not illustrated, a communication system performing a communication function for voice communication and data communication. The communication system may be configured with a plurality of communication sub modules supporting different communication networks. For example, the communication network can include, though not limited to, at least one of a Global System for Mobile Communication (GSM) network, an Enhanced Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a Wireless Local Area Network (WLAN) network, a Bluetooth network, and a Near Field Communication (NFC) network.

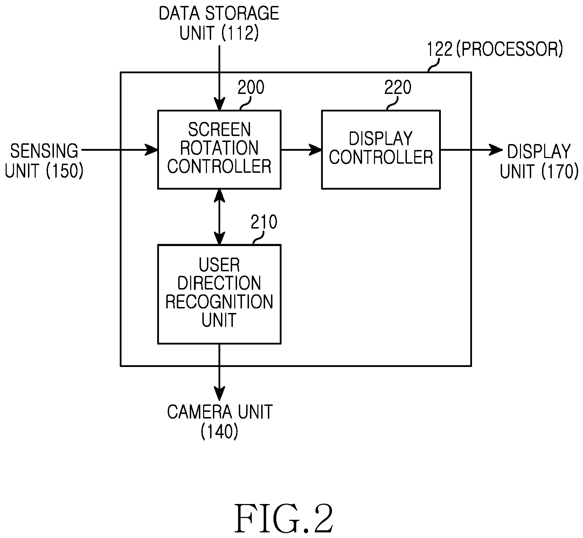

FIG. 2 is a block diagram illustrating an example construction of the processor 122 according to an exemplary embodiment of the present invention. The processor 122 can include a screen rotation controller 200, a user direction recognition unit 210, and a display controller 220.

The screen rotation controller 200 executes the screen rotation control program 114 stored in the program storage unit 111 and provides an automatic screen rotation function in consideration of a direction change value of the electronic device 100 and a direction change value of a user. For example, the screen rotation controller 200 can selectively provide the automatic screen rotation function in consideration of a direction change value of the electronic device 100 dependent on the rotation of the electronic device 100 sensed through the sensing unit 150 and a direction change value of the user determined through the user direction recognition unit 210. In detail, if the direction change value of the electronic device 100 and the direction change value of the user are substantially the same, the screen rotation controller 200 controls to maintain the display direction of the display unit 170. That is, if these direction change values are the same in a state where the automatic screen rotation function is activated, the screen rotation controller 200 can restrict a display direction rotation of the display unit 170 resulting from a direction change of the electronic device 100. Meanwhile, if the direction change value of the electronic device 100 and the direction change value of the user differ from each other, the screen rotation controller 200 can command a rotation of the display direction of the display unit 170 in consideration of the direction change of the electronic device 100.

If the direction change of the user cannot be sensed through the user direction recognition unit 210, the screen rotation controller 200 may control to rotate the display direction of the display unit 170 in consideration of the direction change of the electronic device 100.

Further, if the rotation of the electronic device 100 is sensed through the sensing unit 150, the screen rotation controller 200 may activate the camera unit 140 in order for the user direction recognition unit 210 to sense the direction change of the user. At this time, the screen rotation controller 200 selectively activates the camera unit 140 according to automatic screen rotation function provision or non-provision of an application program that is being executed at a time point at which the rotation of the electronic device 100 is sensed. Here, the screen rotation controller 200 determines automatic screen rotation function provision or non-provision of an application program from the data storage unit 112.

The user direction recognition unit 210 executes the user direction recognition program 115 stored in the program storage unit 111 to determine the direction of the user. To this end, recognition unit 210 can determine the direction of the user by using an image acquired through the camera unit 140. For example, by using a face detection algorithm, the user direction recognition unit 210 can perform face detection through position recognition of at least one of a contour of a face, eyes, a nose, a chin, and a mouse in the image acquired through the camera unit 140. If detecting a face in the image acquired through the camera unit 140, the user direction recognition unit 210 can recognize that the user is in the same direction as the electronic device 100, in the manner described earlier.

The display controller 220 controls execution of the GUI program 113 stored in the program storage unit 111 and the display of a user interface graphically through the display unit 170. For example, the display controller 220 controls to display on the display unit 170 information of an application program driven in an application program driving unit. The display controller 220 can control a display direction change of the display unit 170 according to automatic screen rotation determined in the screen rotation controller 220. In detail, if the screen rotation controller 200 activates the automatic screen rotation function, the display controller 220 controls to rotates the display direction of the display unit 170 according to a rotation value determined in the screen rotation controller 200. Meanwhile, if the screen rotation controller 200 deactivates the automatic screen rotation function, the display controller 220 controls to maintains the display direction of the display unit 170.

In the aforementioned exemplary embodiment, the processor 122 can be constructed to include constituent elements for providing automatic screen rotation adaptively according to a direction change of a user as separate modules 200, 210 and 220. In another exemplary embodiment, the processor 122 may execute software constituent elements stored in the program storage unit 111, within one module comprising sub-modules 200, 210 and 220, to provide automatic screen rotation adaptively according to the direction change of the user.

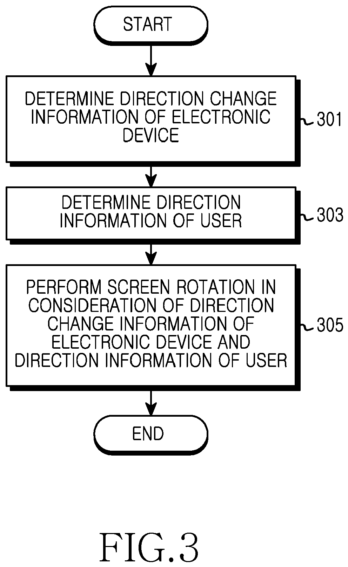

FIG. 3 illustrates a method for providing a screen rotation function in consideration of a user's direction, in electronic device 100 according to a first exemplary embodiment of the present invention. At the outset of the method, direction and/or direction change information of the electronic device is determined (if no change in direction has occurred, the method may maintain a determination of the device's previous direction in this step). For example, when the rotation of the electronic device is sensed through the sensing unit 150, electronic device can determine the rotation direction of the electronic device and a direction change value thereof by using sensing data sensed through the sensing unit 150.

The method next proceeds to step 303 and determines direction information of a user by using an image taken through the camera unit 140. For example, by using a face detection algorithm, the electronic device can attempt face detection in an image acquired through the front camera lens of camera unit 140. If detecting a face in the image acquired through the camera unit 140, the electronic device may recognize that the direction of the user is the same as that of the electronic device. Meanwhile, if failing to detect a face in the image provided from the camera unit 140, the electronic device may rotate the image acquired through the camera unit 140 in consideration of the direction change information of the electronic device. Thereafter, the electronic device can attempt face detection in the rotated image. If detecting the face in the rotated image, the electronic device may determine the direction of the user according to the direction change information of the electronic device. If failing to detect the face in the rotate image, the electronic device may recognize that it cannot recognize the face through the image acquired through the camera unit 140.

After determining the direction and/or direction change information of the electronic device and the direction information of the user, the method proceeds to step 305 and selectively performs automatic screen rotation in consideration of the direction / direction change information of the electronic device and the direction information of the user. For example, referring to FIG. 6, when a direction (610) of the electronic device and the direction (600) of the user are substantially the same, as the figure illustrates, the electronic device 100 maintains the display direction of the display 170 (620). That is, even in a state where the automatic screen rotation function is activated, the electronic device 100 can restrict a display direction rotation of the display 170 resulting from a direction change of electronic device 100 that would otherwise result in a rotation in a conventional autorotation. Note that in FIG. 6, the sides of the user's head are detected to be substantially parallel to the long sides L1, L2 of the electronic device 100 and substantially perpendicular to the short sides W1, W2, corresponding to the condition of the user and electronic device 100 being oriented in the same direction. Consequently, the contents are displayed on the display 170 in a manner normally intended for the electronic device 100 in a vertical orientation. For example, in the case of text contents, the text is displayed on the rectangular display as it would normally be seen on a rectangular page of paper by a user standing or sitting upright.

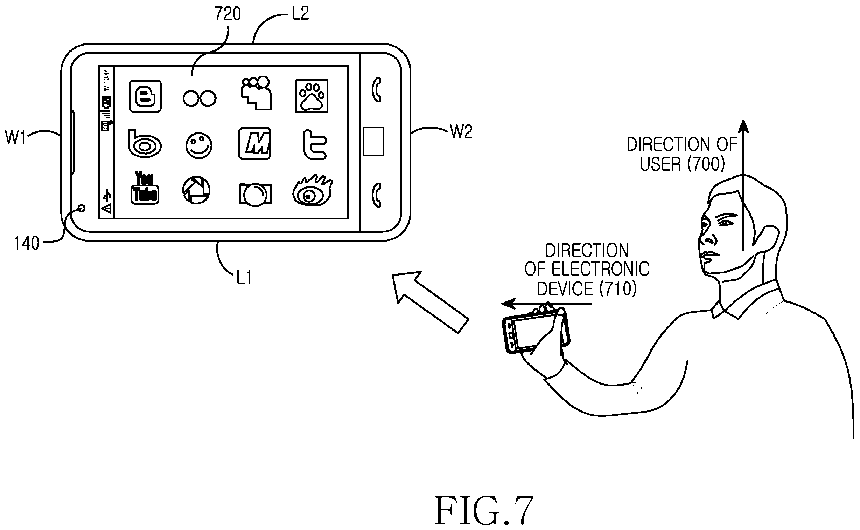

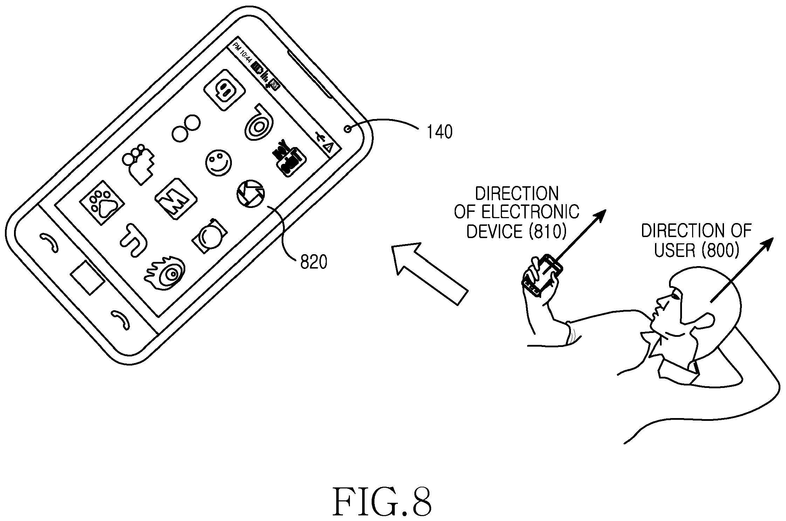

Referring to FIG. 7, when a changed direction (710) of electronic device 100 and the direction (700) of the user differ from each other by more than a predetermined threshold angle, electronic device 100 rotates the contents screen relative to the prior condition in consideration of a direction change of the electronic device (720). (The predetermined threshold angle may be set close to 90°.) For instance, in FIG. 7, since the electronic device 100 is rotated by approximately 90° with respect to the user's direction, it can be assumed that the user intended to rotate the electronic device100 and hence, to rotate the screen contents. However, if in FIG. 7, the user had also tilted his head to substantially the same angle as the electronic device rotation (e.g., about 90° in the example), the method would have refrained from changing the screen direction of the display 170, because it is assumed that the user did not intend to rotate the screen contents. This is illustrated in FIG. 8, where it is seen that when a changed direction (810) of the electronic device 100 and the direction (800) of the user are substantially the same as each other, the electronic device 100 maintains the display direction of the display 170 (820). That is, even in a state where the automatic screen rotation function is activated, the electronic device 100 can restrict a display direction rotation of the display unit 170 resulting from a direction change of the electronic device that would otherwise produce a screen rotation.

As described above, the electronic device can selectively perform screen rotation resulting from a direction change of the electronic device, in consideration of direction change information of the electronic device and direction information of a user. If the electronic device cannot detect a face through an image acquired through the camera unit 140, the electronic device may rotate the display direction of the display unit 170 in consideration of just a direction change of the electronic device, as in a conventional autorotation.

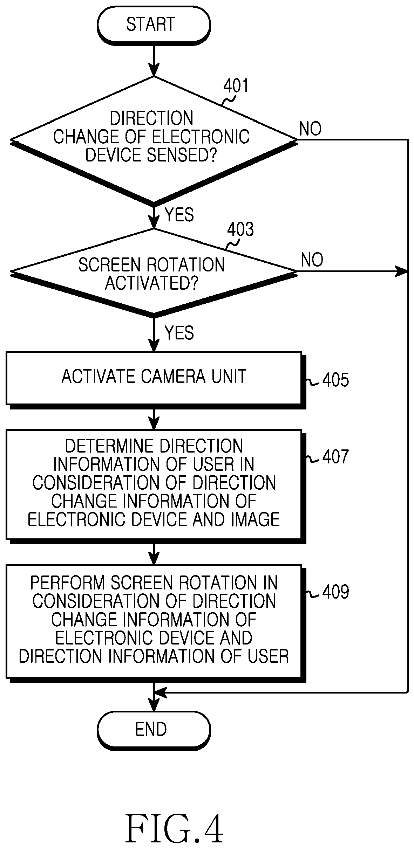

FIG. 4 illustrates a method for providing a screen rotation function in consideration of a direction change value of a user in an electronic device according to a second exemplary embodiment of the present invention.

In this method, it is first determined if a direction change of electronic device 100 is sensed (step 401), via sensing signals provided by the sensing unit 150. More specifically, it is determined based on the sensing signals whether a direction change value of the electronic device is greater than a reference value. Here, the reference value can be a reference change value for conventionally activating the automatic screen rotation function of the electronic device, e.g., close to a 90° rotation detection with a normal to the electronic device 100 front surface pointing substantially parallel to the ground. (As noted above, if the electronic device 100 display 170 front surface is facing up or down, a spinning type rotation is ignored for the purpose of screen rotation.)

If it is determined in step 401 that the direction change of the electronic device is not sensed, the electronic device terminates the algorithm of this embodiment. If the direction change of the electronic device is accomplished within a reference range, the electronic device can recognize that is does not provide the automatic screen rotation function, and terminate the algorithm..

Meanwhile, if it is determined in step 401 that the direction change of the electronic device is sensed, the method proceeds to step 403 and determines if the automatic screen rotation function has been activated. For example, the electronic device can determine if an automatic screen rotation menu has been set. For another example, the electronic device may determine whether an application program currently preferentially being executed supports the automatic screen rotation function.

If it is determined in step 403 that the automatic screen rotation function has not been activated, the electronic device terminates the algorithm of the present embodiment. Conversely, if it has been activated, then at step 405 the camera unit 140 is activated. At this time, the electronic device does not display on the display unit 170 an image acquired through the camera unit 140.

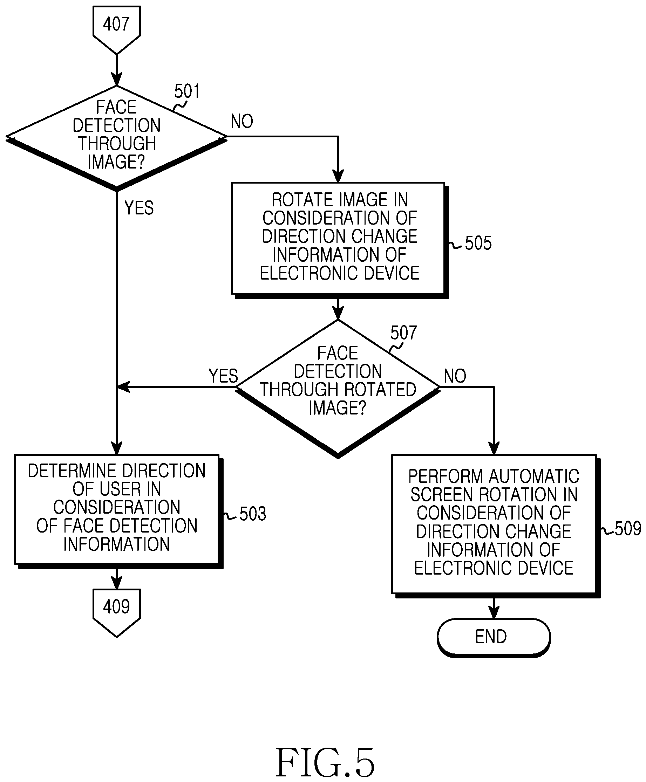

The method next proceeds to step 407 and determines direction information of the user and direction change information of the electronic device. For instance, as illustrated in FIG. 5 and described below, the electronic device can determine the direction information of the user through face detection for the image acquired through the camera unit 140. At this time, the electronic device may attempt face detection in consideration of the direction change information of the electronic device.

After determining the direction change information of the electronic device and the direction information of the user, the method proceeds to step 409 and selectively performs automatic screen rotation in consideration of the direction and/or change information of the electronic device and the direction information of the user. Here, the examples of FIGS. 6 - 8 described above are equally applicable.

FIG. 5 illustrates a procedure for determining a direction change value of a user in an electronic device according to an exemplary embodiment of the present invention.

If activating the camera unit 140 in step 405 of FIG. 4, the electronic device proceeds to step 501 and determines if it can detect a face in an image acquired through the camera unit 140.

If detecting the face in the image acquired through the camera unit 140, the electronic device proceeds to step 503 and recognizes that the direction of the user is substantially the same as that of the electronic device. That is, the electronic device can recognize a changed direction of the electronic device, relative to the direction of the user.

Meanwhile, if failing to detect the face in the image provided from the camera unit 140, the electronic device proceeds to step 505 and rotates the image acquired through the camera unit 140, in consideration of the direction change information of the electronic device. For example, if the electronic device is rotated by 90° to the right, the electronic device can rotate the image acquired through the camera unit 140 by 90° to the right.

After that, the electronic device proceeds to step 507 and determines if it can detect the face in the rotated image. For example, by using the face detection algorithm, the electronic device can determine if it can detect the face through position recognition of at least one of a contour of the face, eyes, a nose, a chin, and a mouse in the image, which has been rotated considering the direction change information of the electronic device.

If detecting the face in the rotated image, the electronic device proceeds to step 503 and can determine the direction of the user with respect to the direction change information of the electronic device. For example, if recognizing the face in the image rotated by 90° to the right, the electronic device can recognize a direction rotated by 90° from the changed direction of the electronic device to the left, as the direction of the user.

Next, the electronic device proceeds to step 409 of FIG. 4 and selectively performs automatic screen rotation in consideration of the direction change information of the electronic device and the direction information of the user.

Meanwhile, if failing to detect the face in the rotated image, the electronic device recognizes that it cannot recognize the face through the image acquired through the camera unit 140. According to this, the electronic device proceeds to step 509 and performs automatic screen rotation in consideration of the direction change information of the electronic device, as in a conventional autorotation.

As described above, an electronic device in accordance with the present embodiments can selectively perform automatic screen rotation in consideration of direction and/or direction change information of the electronic device and direction information of a user. Advantageously, this results in a reduced occurrence of unintended screen rotations. This advantage is illustrated in the example of FIG. 8 where, although the user lies down while he/she was previously operating the electronic device while standing as illustrated in FIG. 6, the electronic device can maintain the display direction of a display region, as desired by the user. The display screen direction is maintained even though the device is rotated to a point that would conventionally produce a screen rotation, because the changed direction of the electronic device is substantially the same as the direction of the user, which has also changed.

In the aforementioned exemplary embodiment, in a state where the automatic screen rotation is activated, the electronic device can selectively perform the automatic screen rotation in consideration of the direction change information of the electronic device and the direction information of the user. That is, the device performs automatic screen rotation as a function of both a detected orientation of the device and a detected orientation of the user with respect to the device.

In another exemplary embodiment, the electronic device may set to activate or deactivate the automatic screen rotation function in consideration of the direction change information of the electronic device and the direction information of the user. For instance, in the example of FIG. 6, when a changed direction (610) of the electronic device and the direction (600) of the user are substantially the same,, the electronic device can set to deactivate the automatic screen rotation function. In the example of FIG. 7, when a changed direction (710) of the electronic device and the direction (700) of the user differ beyond a threshold angle, the electronic device can set to activate the automatic screen rotation function.

As described above, exemplary embodiments of the present invention can easily prevent an inconvenience of changing the display direction of a display region in situations that a user does not intend even without a separate menu setting, by adaptively providing an automatic screen rotation function in consideration of a direction change of an electronic device and a direction change of a user of the electronic device.

It will be appreciated that embodiments of the present invention according to the claims and description in the specification can be realized in the form of hardware, software or a combination of hardware and software. Any such software may be stored in a non-transient computer readable storage medium. The non-transient computer readable storage medium stores one or more programs (software modules), the one or more programs comprising instructions, which when executed by one or more processors in an electronic device, cause the electronic device to perform a method of the present invention. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the scope of the invention as defined by the appended claims.

## Claims

1. A method in an electronic device, the method comprising:
determining (401) a direction of the electronic device;
determining (407) a direction of a user; and
determining (409) whether to rotate a screen by comparing the direction of the electronic device with the direction of the user;
wherein determining the direction of the user comprises:
determining the direction of the user by using an image acquired through an image sensor of the electronic device;
performing face detection on the acquired image; and
if detecting a face in the acquired image, determining that the direction of the electronic device and the direction of the user are substantially the same; **characterised by**: if failing (501) to detect the face in the acquired image, rotating (505) the acquired image based on the direction of the electronic device;
performing (507) the face detection on the rotated image;
if detecting the face in the rotated image, determining (503) the direction of the user based on the direction of the electronic device.

2. The method of claim 1, further comprising:
before determining the direction of the user, determining (403) whether an automatic screen rotation function is activated; and
if the automatic screen rotation function is activated, activating (405) the image sensor of the electronic device.

3. The method of claim 2, wherein determining (403) whether the automatic screen rotation function is activated comprises:
determining automatic screen rotation function support or non-support of an application program that is being executed in the electronic device.

4. The method of claim 1, further comprising, if failing to detect the face in the rotated image, determining that the face in the image is undetectable.

5. The method of claim 4, wherein determining whether to rotate the screen comprises:
if the face is undetectable in the image, rotating (509) the screen based on the direction of the electronic device.

6. The method of claim 1, wherein determining whether to rotate the screen comprises:
if the direction of the electronic device and the direction of the user are substantially the same, maintaining a current screen; and
if the direction of the electronic device and the direction of the user differ, rotating the current screen based on the changed direction of the electronic device.

7. The method of claim 1, wherein determining the direction of the electronic device comprises:
if the direction change of the electronic device is sensed, comparing a direction change value of the electronic device with a reference value; and
if the direction change value of the electronic device is greater than the reference value, determining the changed direction of the electronic device.

8. The method of claim 7, wherein determining the changed direction of the electronic device is performed using a sensing device.

9. An electronic device comprising:
display unit (170);
at least one processor (120);
wherein, the processor is arranged to implement the method any one of claims 1 to 8.

## Patentansprüche

1. Verfahren in einem elektronischen Gerät, wobei das Verfahren umfasst:
Bestimmen (401) einer Ausrichtung des elektronischen Geräts,
Bestimmen (407) einer Ausrichtung eines Benutzers und
Bestimmen (409), ob ein Bildschirm zu drehen ist, indem die Ausrichtung des elektronischen Geräts und die Ausrichtung des Benutzers verglichen werden,
wobei das Bestimmen der Ausrichtung des Benutzers umfasst:
Bestimmen der Ausrichtung des Benutzers durch Verwenden eines Bildes, das mithilfe eines Bildsensors des elektronischen Geräts beschafft wurde,
Ausführen einer Gesichtserkennung an dem beschafften Bild, und
Bestimmen, dass die Ausrichtung des elektronischen Geräts und die Ausrichtung des Benutzers im Wesentlichen die gleichen sind, wenn ein Gesicht in dem beschafften Bild erkannt wird,
**gekennzeichnet durch**
Drehen (501) des beschafften Bildes auf Basis der Ausrichtung des elektronischen Geräts, wenn das Erkennen des Gesichts in dem beschafften Bild fehlschlägt (505),
Ausführen (507) der Gesichtserkennung an dem gedrehten Bild,
Bestimmen (503) der Ausrichtung des Benutzers auf Basis der Ausrichtung des elektronischen Geräts, wenn das Gesicht in dem gedrehten Bild erkannt wird.

2. Verfahren nach Anspruch 1, ferner umfassend:
Bestimmen (403), ob eine automatische Bildschirmdrehfunktion aktiviert ist, bevor die Ausrichtung des Benutzers bestimmt wird, und
Aktivieren (405) des Bildsensors des elektronischen Geräts, wenn die automatische Bildschirmdrehfunktion aktiviert ist.

3. Verfahren nach Anspruch 2, wobei das Bestimmen (403), ob die automatische Bildschirmdrehfunktion aktiviert ist, umfasst:
Bestimmen, ob ein Anwendungsprogramm, das in dem elektronischen Gerät ausgeführt wird, die automatische Bildschirmdrehfunktion unterstützt oder nicht unterstützt.

4. Verfahren nach Anspruch 1, ferner eine Bestimmung umfassend, dass das Gesicht in dem Bild nicht erkennbar ist, wenn die Bestimmung des Gesichts in dem gedrehten Bild fehlschlägt.

5. Verfahren nach Anspruch 4, wobei das Bestimmen, ob der Bildschirm zu drehen ist, umfasst:
Drehen (509) des Bildschirms auf Basis der Ausrichtung des elektronischen Geräts, wenn das Gesicht in dem Bild nicht zu erkennen ist.

6. Verfahren nach Anspruch 1, wobei das Bestimmen, ob der Bildschirm zu drehen ist, umfasst:
Beibehalten eines aktuellen Bildschirms, wenn die Ausrichtung des elektronischen Geräts und die Ausrichtung des Benutzers im Wesentlichen die gleichen sind, und
Drehen des aktuellen Bildschirms auf Basis der veränderten Ausrichtung des elektronischen Geräts, wenn sich die Ausrichtung des elektronischen Geräts und die Ausrichtung des Benutzers unterscheiden.

7. Verfahren nach Anspruch 1, wobei das Bestimmen der Ausrichtung des elektronischen Geräts umfasst:
Vergleichen eines Ausrichtungsänderungswertes des elektronischen Geräts mit einem Bezugswert, wenn die Ausrichtungsänderung des elektronischen Geräts erfasst wird, und
Bestimmen der veränderten Ausrichtung des elektronischen Geräts, wenn der Ausrichtungsänderungswert des elektronischen Geräts größer als der Bezugswert ist.

8. Verfahren nach Anspruch 7, wobei das Bestimmen der veränderten Ausrichtung des elektronischen Geräts unter Verwendung einer Messeinrichtung ausgeführt wird.

9. Elektronisches Gerät mit:
einer Anzeigeeinheit (170),
mindestens einem Prozessor (120),
wobei der Prozessor eingerichtet ist, das Verfahren nach einem der Ansprüche 1 bis 8 auszuführen.

## Revendications

1. Procédé dans un dispositif électronique, le procédé comprenant :
la détermination (401) d'un sens du dispositif électronique ;
la détermination (407) d'un sens d'un utilisateur ; et
la détermination (409) s'il faut tourner un écran en comparant le sens du dispositif électronique au sens de l'utilisateur ;
dans lequel la détermination du sens de l'utilisateur comprend :
la détermination du sens de l'utilisateur par l'utilisation d'une image acquise par l'intermédiaire d'un capteur d'image du dispositif électronique ;
l'exécution d'une détection de visage sur l'image acquise ; et
si un visage est détecté dans l'image acquise, la détermination que le sens du dispositif électronique et le sens de l'utilisateur sont sensiblement identiques ;
**caractérisé par** :
si le visage n'est pas détecté (501) dans l'image acquise, la rotation (505) de l'image acquise sur la base du sens du dispositif électronique ;
l'exécution (507) de la détection de visage sur l'image tournée ;
si le visage est détecté dans l'image tournée, la détermination (503) du sens de l'utilisateur sur la base du sens du dispositif électronique.

2. Procédé selon la revendication 1, comprenant en outre :
avant la détermination du sens de l'utilisateur, la détermination (403) si une fonction de rotation d'écran automatique est activée ; et
si la fonction de rotation d'écran automatique est activée, l'activation (405) du capteur d'image du dispositif électronique.

3. Procédé selon la revendication 2, dans lequel la détermination (403) si la fonction de rotation d'écran automatique est activée comprend :
la détermination si la fonction de rotation d'écran automatique prend en charge ou non un programme d'application en cours d'exécution dans le dispositif électronique.

4. Procédé selon la revendication 1, comprenant en outre, si le visage n'est pas détecté dans l'image tournée, la détermination que le visage dans l'image est indétectable.

5. Procédé selon la revendication 4, dans lequel la détermination s'il faut ou non tourner l'écran comprend :
si le visage est indétectable dans l'image, la rotation (509) de l'écran sur la base du sens du dispositif électronique.

6. Procédé selon la revendication 1, dans lequel la détermination s'il faut ou non tourner l'écran comprend :
si le sens du dispositif électronique et le sens de l'utilisateur sont sensiblement identiques, le maintien d'un écran actuel ; et
si le sens du dispositif électronique et le sens de l'utilisateur diffèrent, la rotation de l'écran actuel sur la base du sens changé du dispositif électronique.

7. Procédé selon la revendication 1, dans lequel la détermination du sens du dispositif électronique comprend :
si le changement de sens du dispositif électronique est détecté, la comparaison d'une valeur de changement de sens du dispositif électronique à une valeur de référence ; et
si la valeur de changement de sens du dispositif électronique est supérieure à la valeur de référence, la détermination du sens changé du dispositif électronique.

8. Procédé selon la revendication 7, dans lequel la détermination du sens changé du dispositif électronique est effectuée en utilisant un dispositif de détection.

9. Dispositif électronique comprenant :
une unité d'affichage (170) ;
au moins un processeur (120) ;
dans lequel le processeur est agencé pour mettre en oeuvre le procédé selon l'une quelconque des revendications 1 à 8.
